Europäisches Patentamt

European Patent Office

Office européen des brevets

(11) Publication number: **0 126 420**
**B1**

# EUROPEAN PATENT SPECIFICATION

(45) Date of publication of patent specification: **23.08.89**

(51) Int. Cl.⁴: **G 10 L 5/00**

(21) Application number: **84105529.6**

(22) Date of filing: **15.05.84**

(54) A speech recognition system.

(30) Priority: **18.05.83 US 495674**

(43) Date of publication of application:
**28.11.84 Bulletin 84/48**

(45) Publication of the grant of the patent:
**23.08.89 Bulletin 89/34**

(84) Designated Contracting States:
**AT BE CH DE FR GB IT LI NL SE**

(56) References cited:
FR-A-2 381 369
US-A-3 646 576
JOURNAL OF THE ACOUSTICAL SOCIETY OF
AMERICA, vol. 38, no. 5, 1965, pages 790-796,
New York, USA; W.A. HILLIX et al.: "Computer
recognition of spoken digits based on six
nonacoustic measures"

ICASSP 82, IEEE INTERNATIONAL
CONFERENCE ON ACOUSTICS, SPEECH AND
SIGNAL PROCESSING, Paris, 3rd-5th May
1982, vol. 2, pages 895-898, IEEE, New York,
USA; G.S. RAMISHVILI et al.: "A system of
speech communication with computer
through noise"

(73) Proprietor: **SPEECH SYSTEMS, INC.**
**18356 Oxnard Street**
**Tarzana California 91356 (US)**

(72) Inventor: **Meisel, William S.**
**6021 Wish Avenue**
**Encino California 91316 (US)**

(74) Representative: **Baillie, Iain Cameron et al**
**c/o Ladas & Parry Isartorplatz 5**
**D-8000 München 2 (DE)**

(56) References cited:
IBM TECHNICAL DISCLOSURE BULLETIN, vol.
5, no. 11, April 1963, pages 70-71, New York,
USA; W.C. DERSCH: "Signal weighting
system"

PATENTS ABSTRACTS OF JAPAN, vol. 3, no.
56(E-110), 15th May 1979, page 16E110 & JP - A
- 54 34227

IBM TECHNICAL DISCLOSURE BULLETIN, vol.
22, no. 11, April 1980, page 5213, New
York,USA; C.V. FREIMAN: "Speech-recognition
assist device"

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

(56) References cited:

ICASSP 82, IEEE INTERNATIONAL
CONFERENCE ON ACOUSTICS, SPEECH AND
SIGNAL PROCESSING, Paris, 3rd-5th May
1982, vol. 2, pages 871-874, IEEE, New York,
USA; T. NITTA et al.: "Development of
Japanese voice-activated word processor
using isolated monosyllable recognition"

IBM TECHNICAL DISCLOSURE BULLETIN, vol.
13, no. 3, August 1970, pages 732-733, New
York, USA; G.L. CLAPPER: "Interlocks for
connected-word recognition system"

REVIEW OF THE ELECTRICAL
COMMUNICATION LABORATORIES, vol. 26,
no. 11-12, November-December 1978, pages
1486-1504, Tokyo, JP; R. NAKATSU et al.: "An
acoustic processor in a conversational speech
recognition system"

## Description

This invention relates to a system for the automatic recognition of spoken speech. It is applicable to speech spoken as individual words or to natural speech spoken without pauses between words. More particularly, the invention relates to a speech recognition system usable in the normal work environment of the speaker, particularly under conditions where there is background noise and where the speaker can continue to perform other duties. The investigation also relates to a microphone assembly which is adapted to be used in such a system.

The potential utility of a machine that can respond to spoken commands or transcribe them is well understood (J. L. Flanagan, "Computers that Talk and Listen", Proc. IEEE, April 1976). Much research has been performed in this area (W. A. Lea, "Speech Recognition: Past, Present and Future", in *Trends in Speech Recognition* (W. A. Lea, ed.), Prentice-Hall, Englewood Cliffs, N. J. 1980).

Speech is entered into a speech recognition system by speaking into a microphone or similar acoustic transducer. In laboratory environments, speech is often entered through a high-quality desk-mounted microphone which is not strongly sensitive to the distance of the speaker's mouth from the microphone element. Such a microphone is not suited for application environments because it will pick up background noise and gets in the way when other tasks are to be performed. In actual applications, a close-talking, head-mounted microphone is typically used, such as disclosed in U.S. Patent 4,039,765 (issued to Tichy et al on August 2, 1977). Some applications envision the use of telephone handsets (U.S. Patent 4,181,821).

Speech recognition systems proposed to date envision implicity or explicitly a single speech signal produced by a microphone or acoustic transducer (e.g., see Lea, op cit; U.S. Patents 4,087,630; 4,156,868; 4,277,644; 4,292,470; and 4,348,550). No information is passed to the recognizer as to the physical source of the sound (e.g., nasal versus mouth).

Sakoe (U.S. Patent 4,239,936) uses two microphones, but only one is the speech signal. The second microphone is placed so as to avoid the speech signal and to detect background noise with a view toward minimizing its effect on recognition accuracy.

No recognition system can extract from a speech signal information which is not present in the signal. Single microphone particularly when embodied with close-talking microphones, lose information useful in speech recognition. Close-talking microphones do not adequately pick up sounds which are not near the microphone; hence, a microphone near the mouth will pick up nasal and throat sounds poorly. Further, a single microphone yields no direct clue as to the physical source (e.g., mouth, nose or throat) of the sound, even though this information is valuable in recognition.

Journal of the Acoustical Society of America, vol. 38, no. 5, 1965, pages 790—796, Hillix et al. discloses a hot wire anemometer measuring air velocity in front of the lips, a lip microphone, a nose microphone, a throat microphone and a tongue sensor. US—A—3 646 576 discloses the comparison of throat and oral signals.

According to the present invention, there is provided a system for pre-processing of speech according to claim 1 and a speech recognition system according to claim 5. The present invention also contemplates a method of pre-processing speech according to claim 6 and a method of speech recognition according to claim 8.

Brief description of the drawings

In the drawings:

Figure 1 shows the major components of the recognition system arranged with a single analog channel (e.g., a phone line or a recording medium) connecting them.

Figure 2 is a side elevational view of a microphone assembly forming a part of this invention and illustrates the disposition of the microphone relative to a speaker's face when the speaker is speaking information that he wishes to have printed;

Figure 3 is an enlarged perspective view of a face-plate included in the microphone assembly of Figure 2;

Figure 4 is an enlarged elevational view of the microphone assembly of Figure 2 as seen from the surface adjacent the speaker's face;

Figure 5 is an enlarged fragmentary sectional view of the microphone assembly and is taken substantially on the line 6—6 of Figure 2;

Figure 6 is an enlarged perspective view, similar to Figure 3, of a modified faceplate;

Figure 7 illustrates waveforms of the words "The Mob" as detected by a microphone adjacent the nose of the speaker;

Figure 8 illustrates waveforms of the words "The Mob" as detected by a microphone adjacent the mouth of the speaker;

Figure 9 shows detail of a signal pre-processor included in the recognition system Figure 1;

Figure 10 shows details of an amplitude detector/comparator/integrator unit (ADCI) also included in Figure 9;

Figure 11 shows the input stage of a speech recognition subsystem included in the recognition system of Figure 1 for decoding the information in the single analog signal;

Figure 12 shows how a speech recognition subsystem included in Figure 1 follows an input stage shown in Figure 11;

Figure 13 shows methods used by a decision tree processor included in Figure 12 to classify individual spoken digits;

Figure 14 shows steps for extending the system to continuously spoken speech; and

Figure 15 shows a system modification for implementing the steps shown in Figure 14.

Detailed description of the embodiments

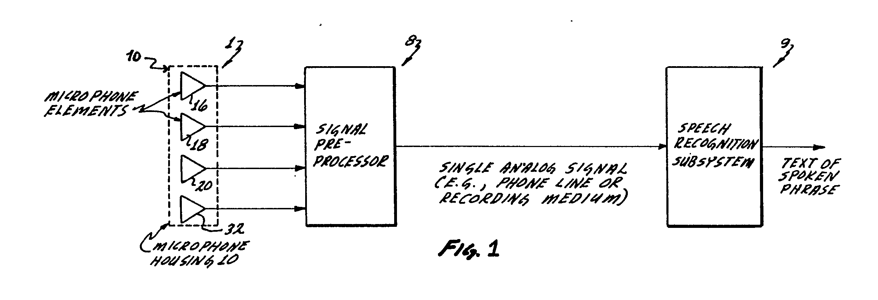

In Figure 1, the three main subsystems of the recognition system are shown: (1) a microphone housing 10, with a plurality of microphones 16, 18, 20 and 32; (2) a signal pre-processor 8; and (3) a speech recognition subsystem 9. The microphone housing 10 holds the microphones 16, 18, 20 and 32 in appropriate positions. These microphones introduce multiple signals to the signal pre-processor 8.

The pre-processor 8 processes the signals from the microphones 16, 18, 20 and 32 to determine at each instant imbalances in the relative amplitude of each microphone. These imbalances are indicative of the production of certain speech sounds.

It is unnecessary, and probably impractical, for all the signals to be analyzed by the recognition subsystem 3. The microphone 18 at the corner of the mouth provides the most information generally. However, during the production of nasals, for example, the nose microphone 16 may provide more information. The pre-processor 8 can select instant-by-instant which signal is introduced to the speech recognition subsystem 9. The connection between signal pre-processor 8 and speech recognition subsystem 9 is over a single analog channel. This channel may be a phone line or a recording medium (such as magnetic tape). The configuration shown in Figure 1 may be used in some cases where the microphones and the pre-processor 8 are in a different locale than the speech recognition subsystem 9. It is noted that the "analog" connection may also be in a digital form which is converted from the analog signal in, for example, a digital phone system.

In the system of Figure 1, the pre-processor 8 condenses into a single line the information sent.

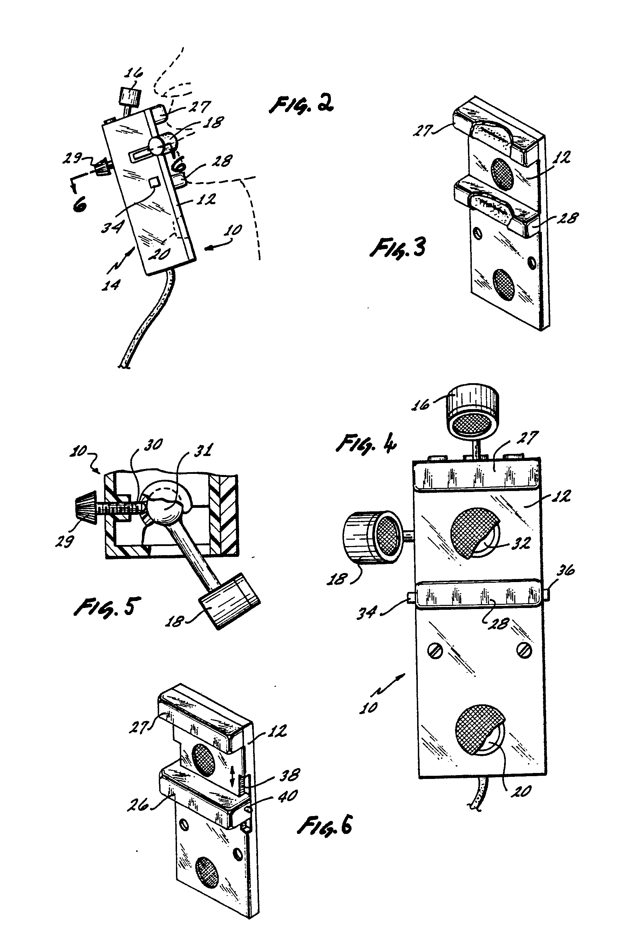

The microphone assembly including the housing 1 and the microphones 16, 18, 20 and 32 is discussed first. The microphone assembly is illustrated in Figures 2, 3, 4 and 5 and is generally indicated at 10 in those Figures. The microphone assembly 10 forms a part of this invention and is especially adapted to be used with a system included in this invention. The microphone assembly 10 includes the housing 14 and a removable faceplate 12. The microphones 16, 18, 20 and 32 are adapted to be supported by the housing 14 at selective positions on the housing. The microphone 16 is adapted to sense the nasal sounds emanating from the nose of a speaker; the microphone 18 is disposed to sense the sounds emanating from the mouth of the speaker; the microphone 20 is disposed to detect vibration of the vocal cords through sounds emanating from the throat to a speaker; and the microphone 32 is designed to detect plosive and sibillant sounds from the mouth.

A faceplace 14 is adapted to be attached to the housing 12 as by fastening screws 22. The faceplate 14 may be constructed in accordance with the facil characteristics of an individual speaker. For example, the faceplate 14 may be provided with a pair of spacers 27 and 28, each of which extends outwardly from the faceplate at a position dependent upon the facial characteristics of the individual speaker. The spacer 27 may be positioned against the upper lip of the speaker and the spacer 28 may be positioned against the chin of the speaker.

The distance between the spacers 27 and 28 is individual to the speaker to assure that the microphones 16, 18 and 20 will be disposed respectively adjacent the nose, mouth and throat of the speaker. The dimensions of the spacers may also be particular to the speaker. The spacer 27 also provides some acoustical separation between the nose and mouth microphones. This enhances the difference between the sounds reaching each microphone.

The spacers 27 and 28 may be covered with a resilient material such as a rubber or a plastic provide for a variable force of the spacers against the face of the speaker in accordance with the disposition of the assembly 10 against the speaker's face and to enhance the comfort of the speaker while the assembly 10 is disposed against the speaker's face.

When the face plate 12 is properly positioned against the speaker's face, the microphone 18 is positioned adjacent one side of the speaker's mouth. This results from the disposition of the microphone 18 at one corner of the housing 12 in skewed relationship to the housing. The microphone 18 is adjustable relative to the housing 12 by loosening a knob 29 on a shaft 30 which extends through the housing from the microphone. When the knob 29 is loosened on the shaft 30 the microphone can be adjustable in any one of three coordinate axes by providing the microphone with a universal joint 31 at a position adjacent one end of the shaft 30. After the microphone 18 is adjusted, the knob is tightened on the shaft 30, to hold the microphone in fixed position. The microphone 18 detects speech sounds from the mouth; its placement is such that it is not overly affected by breath sounds.

The microphone 32 may also be disposed to detect certain sounds emanating from the speaker's mouth. The microphone 32 is adapted to be disposed directly in front of the speaker's mouth to detect such sounds as fricatives (sounds produced with letters such as f, v, and s) and plosives (sounds produced with letters such as p, t and k). As will be appreciated, fricatives and plosives are not loud sounds; they are characterized by releases of breath which are detected most clearly by the microphone 32 because of its location directly in front of the mouth.

A switch 34 is disposed on the housing 12 at one side panel of the body. The switch 34 is adapted to be manually closed by the depression of a forefinger against the adjacent side panel of the housing 12. The switch is adapted to be manually closed during the time that the words being spoken by the speaker are intended to be reproduced in a printed or typewritten form.

A switch 36 is also disposed on the body 12, preferably extending from the side panel of the body opposite the switch 34. The switch 36 is adapted to be manually closed by the depression of a forefinger against the adjacent side panel of the housing 12. The switch 36 constitutes a "command" or "direction" switch to indicate punctuation (such as a period or a question mark), formatting (such as an indication of a paragraph or an indentation or a capitalization of a word) and subsets of the vocabulary (like a number or a proper name). When the speaker presses the switch 36 and speaks a word such as the word "paragraph", the data processor converting the speed to the printed information produces a paragraph in the printing of the information rather than printing the word "paragraph".

The microphone assembly described above has a separate faceplate 12 for each individual speaker. A separate faceplate 12 for each individual speaker is advantageous for hygenic reasons since the speaker tends to breath into the faceplate and even tends at times to touch the faceplate with his mouth and nose. It will be appreciated, however, that a single faceplate can be provided for all speakers on a universal basis. When a single faceplate is universally provided, one of the spacers on the faceplate can be adjustable relative to the other in accordance with the individual characteristics of the speaker's face. This can be accomplished by providing guides 38 (Figure 6) in the faceplate at the opposite ends of the faceplate and by providing for a movement of the spacer 26 along the guides to any position which will define the distance between the upper lip and the chin of the speaker. Screws 40 can then be tightened against the guides 38 to retain the spacer 26 in the desired position.

Figure 7 shows signals indicating the amplitude pattern recorded by a microphone near a speaker's nose when the words "The Mob" are spoken. The abscissa or horizontal axis indicates the period of time in which the words "The Mob" are spoken. The ordinate or vertical axis indicates the pattern of the signals which pass through the microphone 16 as the words "The Mob" is spoken. The portion of the signals representing the "M" sound are indicated by a bracket near the left end of the horizontal axis. As will be seen, the nasal sounds representing the "M" sound have a relatively large amplitude.

Figure 8 illustrates the pattern of signals which are recorded by a close-talking mouth microphone when the words "The Mob" are spoken. A "close-talking mouth microphone" is one in which the microphone is disposed in very close proximity to the speaker's mouth. For example, a close-talking mouth microphone is shown in Figure 1 of patent 4,039,765 issued on August 2, 1977, to Thomas H. Tichy. This type of microphone is generally supported on a rod which extends from a headband disposed over the head of the speaker. It is the type of microphone generally used by telephone operators.

As will be seen from Figure 8, the "M" sound in the word "The Mob" has a relatively low amplitude as sensed by a close-talking mouth microphone. This confirms that the "M" sound is nasal and that it is important, or at least desirable, to detect the nasal component in order to provide a reliable recognition of speech content. Similar proof can be provided of the importance of recording the sounds emanating from the throat or immediately in front of the mouth for certain words in order to provide a reliable recognition of such spoken words.

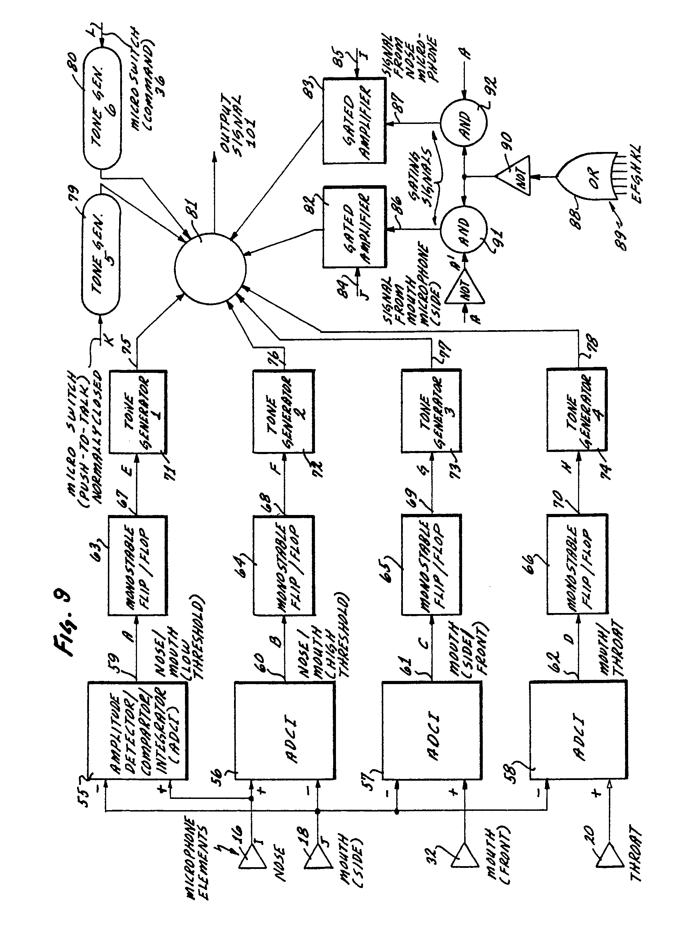

The outputs of the microphone elements may be processed by the signal pre-processor 8 in Figure 1. Figure 9 shows the construction and operation of this pre-processor in some detail. Inputs to the system shown in Figure 9 are from microphones 16, 18, 20 and 32 in the microphone assembly shown in Figures 2 through 6. Inputs from an individual pair of microphones are introduced to amplitude individual ones of amplitude detector/comparator/integrator (ADCI) units in Figure 9. There are 4 ADCI units shown in Figure 9 at 55, 56, 57 and 58.

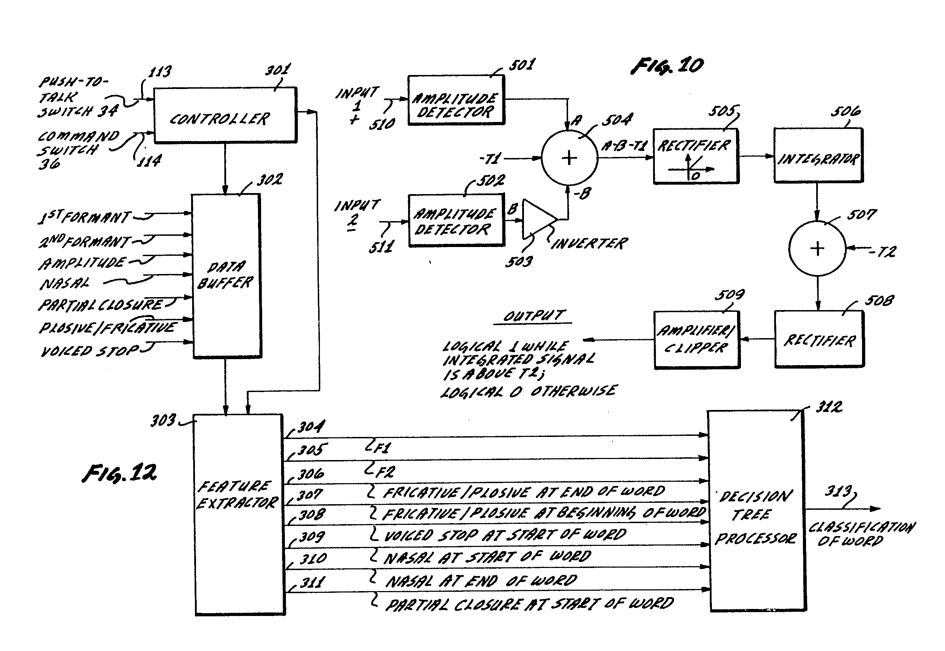

The detailed construction and operation of the ADCI units 55, 56, 57 and 58 are shown in Figure 10. The two inputs to the ADCI unit 55 are respectively introduced to amplitude detectors 501 and 502. Each of amplitude detectors 501 and 502 rectifies and filters the input signal so as to follow the envelope of the speech signal. The output of each of the amplitude detectors 501 and 502 thus represents the amplitude of the input signal on an instant-by-instant basis.

The signal from one of the amplitude detectors, such as the amplitude detector 502, is inverted as at 503 to provide the negative value of the input amplitude. This inverted value is summed with the signal from the detector 501 and with a negative threshold $-T1$ to provide a signal which is positive only when the absolute value of the signal "A" from the amplitude detector 501 exceeds the absolute value of the signal "B" from the amplitude detector 502 by at least the threshold T1. This signal is the output of the summing unit 504, which acts as a comparator.

The signal from the summing unit 504 is introduced to a rectifier 505 so that there is no output from the rectifier 505 unless the signal át the input is positive. Thus the output of rectifier 505 will be non-zero only if the first input 510 to the amplitude detector 501 exceeds the second input 511 to the amplitude detector 502 by at least the threshold T1. The signal from the rectifier 505 is introduced to an integrator 506, which may be a simple resistor-capacitor network. The integrator 506 will integrate the signal from the rectifier 505 over a particular period of time dependent upon the time constant of the integrator circuit. The output of the integrator will thus be the integrated amount by which the input signal amplitude "A" exceeds the input signal amplitude "B" by at least the threshold T1 over a short period of time.

The output of the integrator 506 is fed to a comparator circuit 507. The comparator feeds the rectifier 508. The output of the rectifier 508 is non-zero when, and only when, the integrated output from integrator 506 exceeds a threshold T2. The output of the rectifier 508 is thus non-zero when the amplitude of the first input 510 exceeds the amplitude of the second input 511 in sufficient amplitude and for a sufficient duration to constitute an indication that a particular event is occurring. Such an event may illustratively be the occurrence of a nasal when the input 510 is from the nasal microphone 16 and the input 511 is from the mouth microphone 18.

An amplifier/clipper 509 in Figure 10 amplifies the signal from the rectifier 508 and provides a high gain in such amplification. The amplifier/clipper 509 clips at an amplitude equivalent to that of a "logical true" signal for the digital circuitry. The output of the amplifier/clipper 509 is therefore a logical signal which can be used to drive logical circuitry. It will provide a high output value (interpreted here as being logically true) when the input conditions discussed above exist.

As will be seen in Figure 9, the ADCI circuits 55, 56, 57 and 58 are fed by four (4) different pairs of the microphones 16, 18, 20 and 32. The unit 55 is fed by the nose and mouth microphones 16 and 18, unit 56 by the same microphones, unit 57 by the side mouth and front mouth microphones 18 and 32, and unit 58 by the throat microphone 20 and the mouth microphone. The difference between the ADCI units 55 and 56 is that the threshold T1 of the unit 55 is set lower than the threshold T1 of the unit 56. Thus, the output 59 from the ADCI unit 55 will occur with a smaller difference in inputs than will the output 60 from the ADCI unit 56. The output 59 will become logically true when there is a partial closure of the mouth as when saying the "w" sound in the word "won". The output 60 will become logically true when a nasal is being pronounced. The output 61 will become logically true when a plosive or fricative is being pronounced. The output 62 will become logically true when a voiced stopped sound is being pronounced.

The logical signals 59, 60, 61 and 62 are introduced to monostable flip-flops 63, 64, 65 and 66. Each of the monostable flip-flops 63, 64, 65 and 66 is constructed to produce a 1 signal for a particular period of time and then to produce a 0 signal for a particular period of time when its input is a 1. Each of the monostable flip-flops 59, 60, 61 and 62 will continue to provide a series of signals that alternate between 0 (logical false) and 1 (logical true) as long as its input is true (or 1). Otherwise, the respective outputs 67, 68, 69 and 70 of the flip-flops 63, 64, 65 and 66 will be zero. The alternate production of the 1 and 0 signals from the flip-flops during the introduction of a 1 signal to the flip-flops allows a signal from the mouth or nose microphones to be alternately sampled between non-sampling intervals represented by the pulses of the monostable flip-flops so that the acoustic characteristics of the signals are not masked by tone generators 71, 72, 73 and 74.

Each of the tone generators 71, 72, 73 and 74 produces a tone when its input is logically true. Each tone generator produces a different tone. Thus the respective outputs 75, 76, 77 and 78 from the tone generators 71, 72, 73 and 74 will be a series of pulse tones alternately produced between the sampling of the signals from the nose or mouth microphones during the time that the logical inputs 59, 60, 61 and 62 are true. The particular tones produced will depend upon the physical source of the speech signal.

The tones from the generators 71, 72, 73 and 74 are summed with other signals in the summing amplifier 81 to produce an output signal 101. In the absence of the other signals, the tone produced on the output 101 will indicate the characteristic of the sound being produced by the speaker. In the absence of outputs from any of the ADCI units, the output signal 101 will be from one of the microphones 16 or 18.

A signal 84 (also designated as J) from the mouth microphone 18 is inserted into the gated amplifier 82. A signal 85 (also designated as I) from the nose microphone 16 is inserted into a gated amplifier 83. The signals 84 and 85 are respectively passed through the amplifier 82 and 83 under the control of gating signals 86 and 87. Logical circuits 88, 90, 91, 92 and 93 control the production of the gating signals. The respective outputs J and I of the amplifiers 82 and 83 go into the summing amplifier 81.

Signals E, F, G and H (corresponding to the outputs 67, 68, 69 and 70) from the flip-flops 63, 64, 65 and 66 and signals K and L from the switches 34 and 36 on the microphones control inputs to an OR-gate 88. This OR-gate feeds a NOT-gate 90, which in turn feeds two AND-gates 91 and 92. The gates 91 and 92 are also fed by signals A and A' which arise from the output 59 of the ADCI unit 55. Since the output 59 indicates whether there is an excess of energy from the nasal channel, the signal passed to the summing amplifier 81 from the gated amplifiers 82 and 83 will be from the nose microphone 16 when that microphone level exceeds the level from the mouth microphone 18 by the threshold T1 set in the unit 55. When the nose microphone 16 does not exceed the amplitude of the signals from the mouth microphone 18 by the threshold T1, the output passed to the summing amplifier 81 will be from the mouth microphone 18.

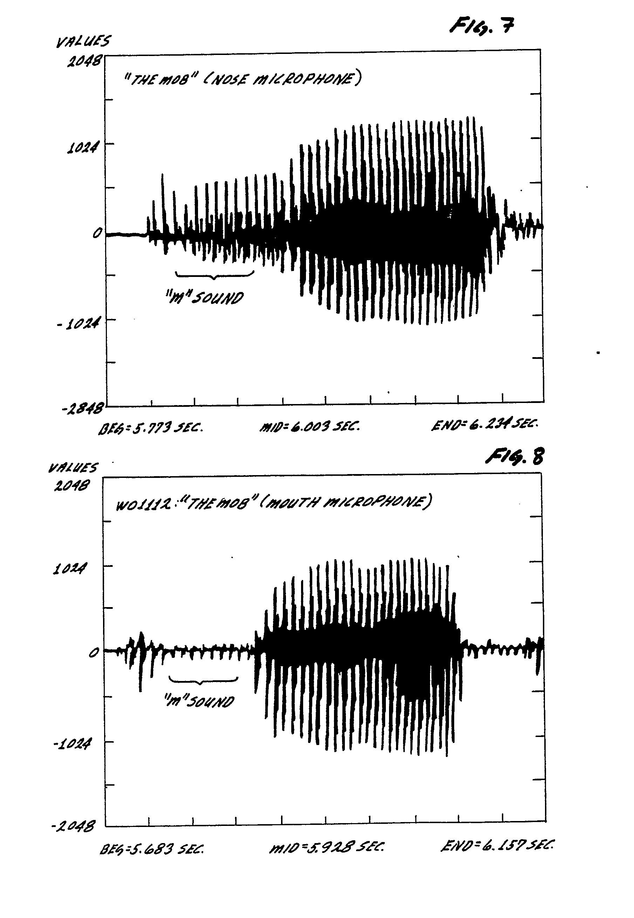

Figure 9 also shows tone generators 79 and 80 controlled by the switches on the housing 12. The switch 36 is the command switch in Figure 5 and the switch 34 is the push-to-talk switch in Figure 5. The switch 34 is normally closed, i.e., it will produce a logically true signal when the switch is released, i.e., when the speaker is not talking. It therefore serves to delineate the beginning and end of a spoken word. The switches 34 and 36 respectively control the generators 79 and 80. Each of the generators 79 and 80 generates different tones than the tone generators 71, 72, 73 and 74 and different from the tones generated by the other one of the generators 79 and 80. The signals from the tone generators 79 and 80 are fed to the summing amplifier 81 to contribute to the output signal 101 from the summing amplifier 81 when the switches are pressed.

Although the tone generators 71, 72, 73, 74, 79 and 80 are shown in separate stages, it will be appreciated that the tone generators can constitute a single generator which resonates at individual frequencies in accordance with selected energizing from the flip-flops 63, 64, 65, 66 and the switches 34 and 36. In this sense, the tone generators can be considered as equivalent to the tone generators in a touch-tone telephone system.

In summary of the subsystem shown in Figure 9, the output of the speech pre-processor unit shown in Figure 1 will be either a tone, a combination of tones, a signal from the nose microphone 16 or a signal from the mouth microphone 18. Because of the arrangement of the logic in Figure 9, there will be no signal from the microphones 16 and 18 when there are signals from any of the tone generators. Because of the monostable operation of the flip-flops 63, 64, 65 and 66, portions of the speech signal will be sent to the output signal 101 even during a condition which causes a logical true signal at the outputs from the flip-flops 63, 64, 65 and 66. This signal can be analyzed by the speech recognition subsystem 9 of Figure 1.

The input portion of the speech recognition subsystem 9 is shown in Figure 11. The single analog signal 101 shown in Figure 9 and described above is the input to this subsystem. The signal 101 may be carried directly through an analog channel such as a phone line or through a medium such as an analog tape recording. If an analog tape recording is used, a tape play-back unit may be used at the input to this system, but such a unit is not shown. However, such a tape play-back unit is well known in the art.

A tone detector circuit 105 in Figure 11 examines the signal 101 for the presence of pure tones such as from the tone generators 71, 72, 73, 74, 79 and 80. The tone detector 105 is logically true on particular output lines depending upon on which tones are present. These output lines 109, 110, 111, 112, 113 and 114 will thus be logically true under the same conditions, respectively, that the signals from the flip-flops 63, 64, 65 and 66 and the tone generators 79 and 80 in Figure 9 are true. The tone detector 105 may be formed from a series of sharp filters which produce a logical signal on the output of the tone detector when the output of one of the narrow filters is sufficiently high. Each of the filters has a frequency corresponding to the frequency of the signals generated by an associated one of the tone generators 71, 72, 73, 74, 79 and 80. This technology is well understood and forms the basis of the touch-tone detector circuits used in communication circuitry.

The output of the tone detector 105 thus produces logical signals which indicate characteristics of the speech sound detected by the various microphone elements. More conventional information on the spectrum and amplitude of the signal is obtained from bandpass filters 102, 103 and 104 in Figure 11. The bandpass filter 102 has a range of approximately 200—800 Hz, which corresponds to the common range of the first energy peak, the first "formant" of speech. The filter 103 has a range of approximately 800—2400 Hz, which corresponds to the range of the second "formant" of speech. The filter 104 has a range of approximately 200—5000 Hz, which covers most of the energy in the speech signal.

The output of the filter 102 is passed to a zero-crossing counter 106 which counts the number of times that the signal crosses zero. The number of crossings in any given interval is a measure of the predominant frequency component in the signal. Similarly, the output of filter 103 is passed to a zero-crossing counter 107. Thus the outputs 115 and 116 of the zero-crossing counters 106 and 107 are respectively estimates of the frequency of the first and second formants of speech. These quantities are useful in detecting characteristics of vowels of certain words. In conjunction with the logic signals presented from the tone detector 105, they help to obtain an identification of both the consonants and vowels of the speech signal.

In addition, the output of the filter 104 is passed to an amplitude detector 108. Thus, the output 117 from the amplitude detector 108 is the amplitude of the overall speech signal. It provides a means of locating the beginning and end of words as well as the centers in time of these words. This output is digitized by an analog-to-digital converter 118. The outputs 115, 116, and 119 from the zero-crossing counters 106 and 107 and the amplitude detector 108 are sampled every ten (10) milliseconds and provide repeated estimates of the signal amplitude and the first and second formants. When the zero-crossing counters 106 and 107 are sampled they are automatically reset to zero so that the value sampled every ten (10) milliseconds is an estimate of the frequency content in each formant in the previous ten (10) milliseconds.

The outputs from the stages shown in Figure 11 go into the final stages of the speech recognition subsystem 9 of Figure 1. These final stages shown in some detail in Figure 12. In discussing the final stages of the speed recognition subsystem, certain assumptions will be made for purposes of illustration. For example, the digits one through nine, the word "oh" (used to mean the number "zero"), and the word "go" used to indicate a new set of digits will be distinguished. Each word is considered to be spoken in isolation.

A controller unit 301 in Figure 12 responds to outputs from the stage shown in Figure 11. These outputs indicate when the push-to-talk switch 34 or the command switch 36 is pressed. When the push-to-talk switch 34 is pressed, the controller 301 knows that data is being entered. It accordingly instructs a data buffer 302 to store the incoming data every ten (10) milliseconds. The data stored in the data buffer 302 is shown as input lines to the data buffer from the logic signals 109—112 and the data signals 115, 116 and 119 in Figure 11. The sequence of values from these input lines is stored every ten (10) milliseconds for the duration of the speech signal while the push-to-talk switch 34 is pressed.

The controller 301 in Figure 12 indicates to a feature extractor 303 when the push-to-talk switch is released. The feature extractor 303 then examines the data in the data buffer 302 to locate the beginning and end of the spoken word as measured by the amplitude signal 119. When the amplitude signal 119 first rises, the feature extractor 303 examines the following sixty (60) milliseconds to determine if any of the logical signals 109, 110, 111 or 112 is true. If there is an indication of a fricative or plosive at the beginning of the word, i.e., if the signal 111 is true at the beginning of the word, then the feature extractor sets a line 307 to a logical true. If there is a voiced stop at the start of the word as indicated by a true signal on the line 112, a line 308 is set true. If there is a nasal at the start of the word as indicated by a high amplitude on the line 109, a line 309 is set high. If there is a partial closure at the start of the word as indicated by a high amplitude on the line 110, a line 311 is set true.

In addition, the feature extractor 303 finds the maximum amplitude between the two end points of the word. The sixty (60) milliseconds surrounding the time at which the maximum amplitude occurs are then examined. For that period, the median zero crossing values from the signals 115 and 116 are calculated by the feature extractor 303. These values are passed by the feature extractor 303 to the lines 304 and 305 as respective estimates of the first and second formants F1 and F2.

Thus eight (8) numerical values represented by the lines 304—311 are created by the feature extractor 303 from one (1) spoken word. The decision tree processor 312 in Figure 12 uses these (8) values to decide the classification of the word, regardless how long the word is or how much original data is stored in the data buffer.

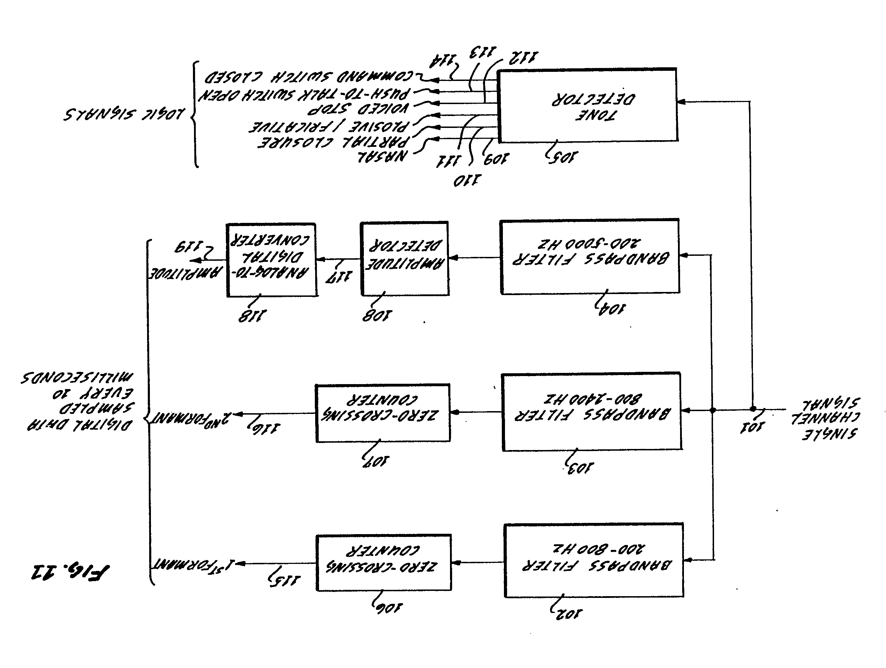

Figure 13 shows the processing performed by the decision tree processor to produce the final classification of the spoken word for the example discussed above of distinguishing between the different digits. The decision tree processor looks initially at the value of F2 as taken from the line 305 to see if it is less than or equal to 1000 Hz (node 201). If it is, it will then evaluate the signals in a node 202. If it is not, it will evaluate the question in a node 210. If the node 202 is evaluating, it looks to see if there s a fricative at the beginning of the word as indicated by a true state in the line 307. If that is true, the tree indicate that the word spoken is "four". It is not true, a node 205 provides an evaluation. The node 205 determines whether there is a voiced stop at the start of the word by looking to see if the line 308 is true. If the line 308 is true, the word is designated by the processor to be "go" (node 204). If the line 308 is not true, it is designated by the processor to be "oh" in a node 206.

If the node 210 receives an input, it evaluates whether the signal F1 is at a frequency of less than approximately 350 Hz. If the answer is yes, a node 211 is activated to indicate that the spoken word is the digit "three". If the answer is no, the signal F1 is passed to a node 212. The node 212 then evaluates to determine whether the frequency of the F1 signal is less than approximately 400 Hz. If it is, the node 212 passes the signals in the decision tree processor 312 to a node 230. If it is not, the node 212 passes the signals in the processor 312 to a node 213.

When the node 230 receives the signals from the node 212, it determines if there is a fricative at the beginning of a word. If the answer is no, a node 209 produces a signal to indicate that the digit is "eight". If the answer is yes, a node 231 operates on the signals from the processor 312 to determine if there is a fricative at the end of the word. If the answer is yes, a node 207 is operative to indicate that the digit is "five". If the answer is no, a node 208 is operative to indicate that the digit is "two".

If required, the node 213 operates to determine if there is a nasal at the end of the word. If there is not, a node 215 becomes operative to indicate that the word is "five". If there is a nasal at the end of the word, a node 214 becomes operative to determine if there is a nasal at the start of the word. If there is, a node 216 becomes operative to indicate that the word is "nine". If there is not, a node 217 becomes operative to determine if there is a partial closure at the start of the word. If there is a partial closure at the start of a word, a node 218 becomes operative to indicate that the word is "one". If there is not such a partial closure at the start of a word, a node 219 becomes operative to indicate that the word is "seven".

The classification provided by proceeding down the tree such as shown in Figure 13 and described above is the output of the processor and of the system. That output can be printed, displayed, used to control some apparatus or simply stored for some future use.

As described above, the relatively simple application relating to digits has been described above to exemplify the operation of the invention. It is clear that a more complicated decision tree and the use of more than eight values in that tree can improve recognition accuracy. The provision and use of such more complicated decision trees are believed to be within the knowledge of a person skilled in the art.

In Figure 12, an input 114 to the controller 301 is provided which indicates when the command switch 36 is closed. One potential used for the command switch 36 in the application discussed is that, when the command switch is pressed and released, the controller interprets that action as a decimal point. This information is then passed on to the feature extractor 303, to the decision tree processor 312 and to the output 313 of the system so that decimal numbers can be expressed by using the command switch and speaking the digits.

It is also clear that a different vocabulary can be chosen. This invention will provide for the recognition of any vocabulary where the knowledge of the presence of nasals, partial closure, plosives/fricatives, and/or voiced stops aids in the recognition. This has been described in a recent article on speech recognition ("Speech Recognition: Turning Theory to Practice", Doddington & Schalk, *IEEE Spectrum,* September, 1981, pg. 31). Seven commercial speech recognizers have been evaluated in that article. In Table III of that article, entitled "The Most Troublesome Words", it has been indicated that all seven products had trouble distinguishing "no" from "go". With this invention, both the nasal "n" and the voiced stop "g" are distinguished at the speech source.

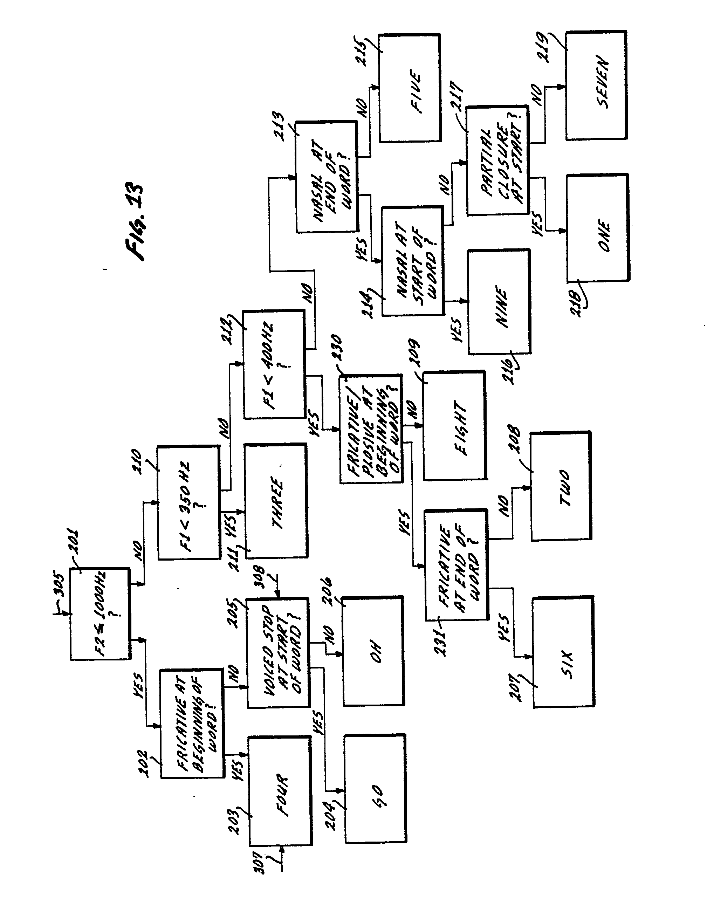

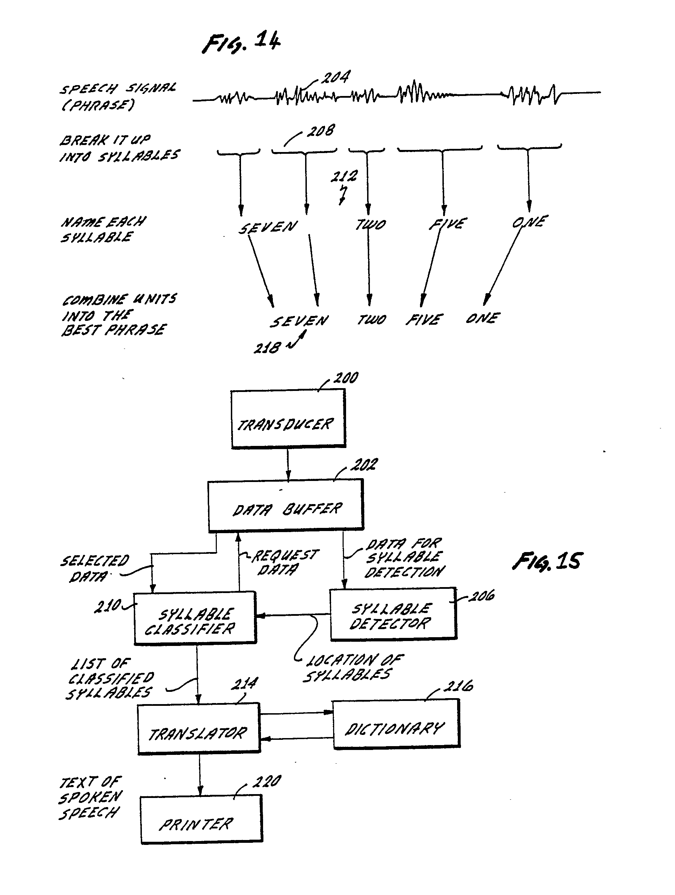

This invention can be applied to speech spoken continuously as well as to speech spoken as isolated words. Figure 14 schematically illustrates the steps in doing so, and Figure 15 is a particular implementation in block form. A syllable classifier 210 in Figure 15 incorporates a decision tree as in Figure 13. It recognizes each syllable. The syllables are combined into words by a translator 214 using a dictionary 216.

The signals from a transducer 200 in Figure 15 are introduced to a data buffer 202. The data buffer 202 may constitute a memory storage unit for storing the information recovered from a medium (such as a magnetic tape) by the transducer 200. This information may be in a form schematically illustrated at 204 in Figure 14. As will be seen in Figure 14, the signals for separate syllables are spaced in time from one another to define a phrase, this phrase being constituted by all of the signals 204 in Figure 14.

The information from the data buffer 202 is introduced to a syllable detector 206 in Figure 15. The syllable detector 206 operates to detect individual syllables such as the syllables in the words "Seven two five one" in Figure 14. The syllable detector 206 detects the location of these individual syllables. This is illustrated at 208 in Figure 14.

The syllable classifier 210 operates upon the signals from the data buffer 202 in accordance with the information provided by the syllable detector 206 as to the location of the syllables. The syllable classifier 210 responds to the location of the syllables in retrieving data from the buffer 202 and uses an algorithm to classify and recognize each syllable as one among many syllables. This is generally indicated at 212 in Figure 14 for the words "Seven two five one".

The syllable classifier 210 distinguishes at the syllable level. The particular algorithm employed depends upon the syllables to be distinguished. For example, when digits are to be distinguished, the presence of the nasal "n" in a syllable immediately indicates that the syllable is either "one" or "en" as in "seven" or "nine". This simplifies the classification process. The simplification is obtained by algorithms provided in the syllable classifier 210, which may be considered to be a data processor. Similarly, the presence of a sibiliant or fricative can help detect the "s" and "x" in "six", the "s" in "seven" and the "f" in "five". Thus, the problems may be reduced essentially to distinguishing between vowel sounds, which are relatively easy to distinguish.

A translator 214 completes the translation process initiated by the classifier 210. The translator 214 receives the information from the classifier 210 and uses a dictionary 216 to determine the spelling of allowable words in terms of their spelling as syllables. For example, the two syllables "se" and "ven" are combined into "seven". The information obtained from the translator 214 is generally indicated at 218 in Figure 14. This information may then be printed by a printer 220. It may also be delivered in digitally coded form to a word processor or a computer system. The form of this delivery can be through a medium such as a floppy disc or through a standard communications interface (e.g., the RS-232 standard).

Although this application has been disclosed and illustrated with reference to particular embodiments and particular applications, the principles involved are susceptible of numerous other embodiments and applications which will be apparent to persons skilled in the art. The invention is, therefore, to be limited only as indicated by the scope of the appended claims.

**Claims**

1. A system for pre-processing of speech to form a pre-processed speech signal for recognition at a remote speech recognition unit or for recording and subsequent recognition comprising:

first means (18) for detecting the sounds substantially emanating from the mouth of the speaker such that they are not overly affected by breath sounds and for producing an audio signal representing such sounds;

second means (16, 32) for detecting the sounds substantially emanating from the nose or front of the mouth of the speaker and for producing an audio signal representing such sounds,

comparing means (55—92, 105) for comparing the magnitude of the audio signals from the first and second means with each other such that when the audio signals differ by more than a predetermined threshold characteristics of speech sounds including at least one of

i) partial closure of the mouth,

ii) nasal, and

iii) plosive or fricative, are detected, and generating a respective identification signal indicating the presence of the particular detected characteristic and

output circuitry connected to accept one of the audio signals, the output circuitry including gating means arranged periodically to interrupt the audio signal path and substitute therefore the identification signal whenever an identification signal is being generated, thereby forming the pre-processed speech signal.

2. A system according to claim 1 characterized in that the output circuitry includes means for accepting either the audio signal produced by the first means or the audio signal produced by the second means depending on which of said signals has been dominant for a predetermined time.

3. A system according to claim 1 or 2 characterized in that the identification signals consist of tones, wherein each different detected one of said characteristics of speech sounds corresponds to a respective frequency of tone.

4. A system according to any preceding claim wherein there is provided manually operable switch means which generates an additional identification signal to enable an operator to indicate whether a spoken word is information or instructions.

5. A speech recognition system including a speech pre-processor according to any preceding claim connected to a speech recognition unit for analysing the identification signals and the audio signal thereby recognising the words being spoken.

6. A method of pre-processing speech to form a pre-processed speech signal for recognition at a remote speech recognition unit or for recording and subsequent recognition including the following steps:

detecting the sounds substantially emanating from the mouth of the speaker such that they are not overly affected by breath sounds and producing an audio signal representing such sounds;

detecting the sounds substantially emanating from the nose or front of the mouth of the speaker and producing an audio signal representing such sounds,

comparing the magnitude of the said audio signals with each other such that when the audio signals differ by more than a predetermined threshold characteristics of speech sounds including at least one of

i) partial closure of the mouth,
ii) nasal, and
iii) plosive or fricative, are detected.

generating a respective identification signal indicating the presence of the particular detected characteristic and forming the pre-processed speech signal by taking one of the audio signals and whenever an identification signal is being generated interrupting the audio signal periodically and substituting therefore the identification signal.

7. A method according to claim 6 characterized in that the audio signal that is output is selected according to which audio signal has been dominant for a predetermined time.

8. A method of speech recognition including the method according to claim 6 or 7 and followed by the steps of passing the pre-processed speech signal to a speech recognition unit for analysis of the identification signal and the audio signal, thereby recognizing the words being spoken.

**Patentansprüche**

1. System zum Vorverarbeiten von Sprache zu einem vorverarbeiteten Sprachsignal zum Erkennen in einer entfernten Spracherkennungseinheit oder zum Aufzeichnen und späteren Erkennen, mit

einer ersten Einrichtung (18, 32) zum Erfassen der im wesentlichen aus dem Mund des Sprechers austretenden Geräusche derart, daß sie nicht übermäßig von Atemgeräuschen beeinflußt werden, und zum Erzeugen eines derartige Geräusche darstellenden Tonsignals;

zweiten Mitteln (16) zum Erfassen der im wesentlichen aus der Nase oder von der Vorderseite des Mundes des Sprechers austretenden Geräusche und zum Erzeugen eines derartige Geräusche darstellenden Tonsignals,

einer Vergleichseinrichtung (55—92, 105) zum Vergleich der Größe der von der ersten und der zweiten Einrichtung erzeugten Tonsignale miteinander, so daß bei voneinander um mehr als einen vorherbestimmten Schwellenwert differierenden Tonsignalen Charakteristiken von Lauten erfaßt werden, zu denen

i) durch teilweises Schließen des Mundes erzeugte Laute,
ii) Nasallaute und/oder
iii) Verschluß- oder Reibelaute

gehören, und zum Erzeugen eines entsprechenden Identifikationssignals, das das Vorhandensein einer bestimmten erfaßten Charakteristik anzeigt, und

mit einer Ausgangsschaltung, die so geschaltet ist, daß sie eines der Tonsignale empfängt, und die Torschaltmittel zum periodischen Unterbrechen des Tonsignals und zu dessen Ersatz durch das Identifikationssignal dient, wenn ein Identifikationssignal erzeugt wird, so daß das vorverarbeitete Sprachsignal erzeugt wird.

2. System nach Anspruch 1, dadurch gekennzeichnet, daß die Ausgangsschaltung Mittel aufweist, die dazu dienen, entweder das von der ersten Einrichtung erzeugte Tonsignal oder das von der zweiten Einrichtung erzeugte Tonsignal zu empfangen, je nachdem, welches dieser Signale während eines vorherbestimmten Zeitraums überwogen hat.

3. System nach Anspruch 1 oder 2, dadurch gekennzeichnet, daß die Identifikationssignale aus Tönen bestehen und jede die unteschiedlichen erfaßten Charakteristiken von Lauten je einer bestimmten Tonfrequenz zugeordnet sind.

4. System nach einem der vorhergehenden Ansprüche, dadurch gekennzeichnet, daß eine manuell betätgbare Schalteinrichtung vorgesehen ist, die einzusätzliches Identifikationssignal erzeugt, das einer Bedienungsperson eine Anzeige ermöglicht, ob ein gesprochenes Wort Information oder ein Refehl ist.

5. Spracherkennungssystem mit einer Sprachvorverarbeitungseinrichtung nacheinem der vorhergehenden Ansprüche, die mit einer Spracherkennungseinheit zum Analysieren der Identifikationssignals und des Tonsignals und dadurch zum Erkennen der gesprochenen Wörter verbunden ist.

6. Verfahren zur Vorverarbeiten von Sprache zu einem vorverarbeiteten Sprachsignal zum Erkennen in einer entfernten Spracherkennungseinheit oder zum Aufzeichnen und späteren Erkennen, mit folgenden Schritten:

die im wesentlichen aus dem Mund des Sprechers austretenden Geräuse werden derart ergaßt, daß sie nicht übermäßig durch Atemgeräusche beeinflußt werden, und es wird ein derartige Geräusche darstellendes Tonsignal erzeugt;

die Größe der genannten Tonsinale wird miteinander vergleichen, und wenn die Tonsignale um mehre als einen vorherbestimmen Schwellenwert differieren, werden Charakteristiken von Lauten erfaßt, zu denen

i) durch teilweises Schließen des Mundes erzeugte Laute,

ii) Nasallaute und/oder

iii) Verschluß- oder Reibelaute gehören;

es wird ein entsprechendes Identifikationssignal erzeugt, das das Vorhandensein der jeweils erfaßten Charakteristik anzeigt, und zum Bilden des vorverarbeiteten Sprachsignals wird eines der Tonsignale herangezogen und wird beim Erzeugen eines Identifikationssignals das Tonsignal periodisch unterbrochen und durch das Identifikationssignal ersetzt.

7. Verfahren nach Anspruch 6, dadurch gekennzeichnet, daß als Ausgang jenes Tonsignal gewählt wird, das während eines vorherbestimmten Zeitraums überwogen hat.

8. Verfahren zur Spracherkennung mit dem Verfahren nach einem der Ansprüche 6 oder 7, nach denen das vorverarbeitete Sprachsignal einer Spracherkennungseinheit zugeführt wird, die dazu dient, das Identifikationssignal und das Tonsignal zu analysieren und dadurch die gesprochenen Würter zu erkennen.

**Revendications**

1. Système de prétraitement de la parole pour former un signal de parole prétraité, en vue de la reconnaissance par une unité éloignée de reconnaissance de la parole ou en vue d'un enregistrement pour reconnaissance ultérieure, comprenant:

—des premiers moyens (18, 32) pour détecter les sons émanant sensiblement de la bouche du locuteur de manière qu'ils ne soient pas trop affectés par les bruits de respiration, et pour produire un audiosignal représentant ces sons,

—des seconds moyens (16) pour détecter les sons émanant sensiblement du nez ou de l'avant de la bouche du locuteur et pour produire un audiosignal représentant ces sons,

—des moyens comparaters (55, 92, 105) pour comparer la grandeur des audiosignaux des premiers et deuxièmes moyens l'une à l'autre de sorte que lorsque les audiosignaux diffèrent de plus d'un seuil prédéterminé, on détecté au moins l'une des caractéristiques des phonèmes suivantes:

i) occlusion buccalle partielle,

ii) nasale, et

iii) explosive ou fricative

et on engendre un signal d'identification respectif indiquant la présence de la caractéristique particulière détectée,

—et un circuit de sortie connecté de façon à accepter l'un des audiosignaux, le circuit de sortie comprenant des moyens de déclenchement agencés pour interrompre périodiquement le trajet de l'audiosignal et lui substituer le signal d'identification chaque fois qu'un signal d'identification est engendré, moyennant quoi on forme un signal de parole prétraité.

2. Système selon la revendication 1, caractérisé en ce que le circuit de sortie comprend des moyens pour accepter soit l'audiosignal produit par les premiers moyens soit l'audiosignal produit par les seconds moyens en fonction de celui desdits signaux qui a été prépondérant pendant un temps prédétemriné.

3. Système selon la revendication 1 ou 2, caractérisé en ce que les signaux d'identification consistent en tonalités, chaque caractéristique différente détectée dans les phonèmes correspondant à une fréquence respective de tonalité.

4. Système selon l'une quelconque des revendications précédentes, comprenant des moyens commuatateurs manuels pour engendrer un signal d'identification supplémentaire permettant à un opérateur d'indiquer si un mot prononcé représente une information ou des instructions.

5. Système de reconnaissance de la parole comprenant un système de prétraitement selon l'une quelconque des revendications précédentes raccordé à une unité de reconnaissance destinée à analyser les signaux d'identification et l'audiosignal, de façon à effectuer la reconnaissance des mots prononcés.

6. Procédé de prétraitement de la parole pour former un signal de parole prétraité, en vue de la reconnaissance par une unité éloignée de reconnaissance de la parole ou en vue d'un enregistrement pour reconnaissance ultérieure, comprenant les étapes consistant à:

—détecter les sons émanant sensiblement de la bouche du locuteur de manière qu'ils ne soient pas trops affectés par les bruits de respiration, et produite un premier audiosignal représentant ces sons,

—détecteur les son émanant sensiblement du nez ou de l'avant de la bouche du locuteur et produire un deuxième audiosignal représentant ces sons,

—comparer la grandeur des premier et deuxième audiosignal l'une à l'autre de sorte que lorsque les audiosignaux diffèrent de plus d'un seuil prédéterminé, on détecte au moins l'une des caractérstiques de phonèmes suivantes:

—i) occlusion buccale, partielle,

—ii) nasale, et

—iii) explosive ou fricative

et on engendre un signal d'identification respectif indiquant la présence de la caractéristique particulière détectée,

—et à former un signal de parole prétraité en prenant l'un des audiosignaux, et en interrompant périodiquement l'audiosignal pour lui substituer le signal d'identification chaque fois qu'un signal d'identification est engendré.

7. Procédé selon la revendication 6, caractérisé en ce que l'audiosignal produit en sortie est choisi en fonction de l'audiosignal qui a été prépondérant pendant un temps prédéterminé.

8. Procédé de reconnaissance de la parole comportant le procédé selon les revendications 6 ou 7 et suivi des étapes consistant à transférer le signal de parole prétraité à une unité de reconnaissance de la parole en vue d'analyseur le signal d'identification et l'audiosignal, de façon à effectuer la reconnaissance des mots prononcés.

SPEECH RECOGNITION SUBSYSTEM

TEXT OF SPOKEN PHRASE

9

SINGLE ANALOG SIGNAL (E.G., PHONE LINE OR RECORDING MEDIUM)

*Fig. 1*

8

SIGNAL PRE-PROCESSOR

12

10

MICROPHONE ELEMENTS

16

18

20

32

MICROPHONE HOUSING

1

EP 0 126 420 B1

FIG. 2

FIG. 3

FIG. 4

FIG. 5

FIG. 6

2

*FIG. 7*

VALUES

2048

"THE MOB" (NOSE MICROPHONE)

1024

0

"M" SOUND

-1024

-2848

BEG=5.773 SEC.          MID=6.003 SEC.          END=6.234 SEC.

*FIG. 8*

VALUES

2048

WO1112: "THE MOB" (MOUTH MICROPHONE)

1024

0

"M" SOUND

-1024

-2048

BEG=5.683 SEC.          MID=5.928 SEC.          END=6.157 SEC.

Fig. 9

**FIG. 10**

PUSH-TO-TALK SWITCH 34 *113*

COMMAND SWITCH 36 *114*

*301* CONTROLLER

INPUT 1 + *510*

*501* AMPLITUDE DETECTOR

A

-T1

*504* +

A+B-T1

*505* RECTIFIER

*506* INTEGRATOR

INPUT 2 *511*

*502* AMPLITUDE DETECTOR

B

*503* INVERTER

-B

*507* +

-T2

*302* DATA BUFFER

1ST FORMANT
2ND FORMANT
AMPLITUDE
NASAL
PARTIAL CLOSURE
PLOSIVE/FRICATIVE
VOICED STOP

OUTPUT

LOGICAL 1 WHILE INTEGRATED SIGNAL IS ABOVE T2;
LOGICAL 0 OTHERWISE

*509* AMPLIFIER/ CLIPPER

*508* RECTIFIER

**FIG. 12**

*303*
*304*
*305* F1
*306* F2
*307* FRICATIVE/PLOSIVE AT END OF WORD
*308* FRICATIVE/PLOSIVE AT BEGINNING OF WORD
*309* VOICED STOP AT START OF WORD
*310* NASAL AT START OF WORD
*311* NASAL AT END OF WORD
PARTIAL CLOSURE AT START OF WORD

FEATURE EXTRACTOR

*312* DECISION TREE PROCESSOR

*313* CLASSIFICATION OF WORD

FIG. 11

SINGLE CHANNEL SIGNAL — 101

BANDPASS FILTER 200-800 HZ — 102 → ZERO-CROSSING COUNTER — 106 → 115 → 1ST FORMANT

BANDPASS FILTER 800-2400 HZ — 103 → ZERO-CROSSING COUNTER — 107 → 116 → 2ND FORMANT

BANDPASS FILTER 200-5000 HZ — 104 → AMPLITUDE DETECTOR — 108 → 117 → ANALOG-TO-DIGITAL CONVERTER — 118 → AMPLITUDE / 119

DIGITAL DATA SAMPLED EVERY 10 MILLISECONDS

TONE DETECTOR — 105 → 109 / 110 / 111 / 112 / 113 / 114
NASAL
PARTIAL CLOSURE
PLOSIVE / FRICATIVE
VOICED STOP
PUSH-TO-TALK SWITCH OPEN
COMMAND SWITCH CLOSED
} LOGIC SIGNALS

EP 0 126 420 B1

FIG. 13

*Fig. 14*

SPEECH SIGNAL
(PHRASE)

204

BREAK IT UP
INTO SYLLABLES

208

212

NAME EACH
SYLLABLE

SEVEN        TWO     FIVE      ONE

COMBINE UNITS
INTO THE
BEST PHRASE

SEVEN    TWO   FIVE   ONE

218

200

TRANSDUCER

202

DATA BUFFER

SELECTED
DATA

REQUEST
DATA

DATA FOR
SYLLABLE
DETECTION

*Fig. 15*

210

SYLLABLE
CLASSIFIER

206

SYLLABLE
DETECTOR

LIST OF
CLASSIFIED
SYLLABLES

LOCATION OF
SYLLABLES

214

216

TRANSLATOR

DICTIONARY

TEXT OF
SPOKEN
SPEECH

220

PRINTER